# EUROPEAN PATENT APPLICATION

(11) **EP 4 528 403 A1**
(43) Date of publication of application: **26.03.2025**
(21) Application number: 23199404.7
(22) Date of filing: 25.09.2023
(51) Int. Cl.: G05B 19/042

(54) **I/O STATION STORING CONFIGURATION DATA**

(71) Applicant: ABB SCHWEIZ AG, 5400 Baden (CH)
(72) Inventor: NORBERG, Robert, 632 23 Eskilstuna (SE); WENNERBERG, Johan, 723 48 Västerås (SE); POOK, Stefan, 32423 Minden (DE); JESKE, Ralf, 32469 Petershagen (DE)
(74) Representative: Kransell & Wennborg KB

(57) **Abstract**

The present disclosure relates to an I/O station (10), connected with a plurality of network devices (2, 5, 6) in an automation system The station comprises a plurality of I/O modules (12), each I/O module providing one or more I/O channels (20) connecting respective one or more field device(s) (21). The station also comprises an I/O network interface (11) for forwarding data between the modules (12) and the network devices via a network (3). Each of the channels connecting a respective field device is communicatively connected to at least one of the network devices via the network. The station further comprises a non-volatile storage (22) storing configuration data for the station.

## Description

### TECHNICAL FIELD

The present disclosure relates to an input-output (I/O) station, connected with a plurality of network devices in an industrial automation system.

### BACKGROUND

An I/O station, also called I/O system, is used in an industrial automation system for connecting field devices, such as sensors, actuators or the like in an industrial plant to controllers of the plant. The I/O station typically comprises a Fieldbus Communication Interface (FCI) and I/O modules connecting the field devices, where the FCI interface is arranged for forwarding data between the modules and the controllers, via fieldbus or fieldbus network. Since the controllers are digital while at least some of the field devices maybe analog legacy devices (e.g. requiring a 4-20 mA signal), the I/O station may convert analogue signals to digital and *vice versa.* Each of the I/O modules may be any of a digital-in (DI) module, digital-out (DO) module, analog-in (AI) module or analog-out (AO) module, or a combination thereof.

For configuring an I/O station, e.g. at first start-up or after a power outage, an engineering tool may be connected to the I/O station, e.g. via the fieldbus. The engineering tool is typically a computing device, e.g. a PC, of a human operator of the automation system by means of which the operator can configure the I/O station, e.g. via engineering services installed on the engineering tool.

### SUMMARY

It is an objective of the present invention to provide an improved I/O station which can be configured more easily.

According to an aspect of the present invention, there is provided an I/O station, connected with a plurality of network devices in an automation system. The I/O station comprises a plurality of I/O modules, each I/O module providing one or more I/O channels connecting respective one or more field device(s). The station also comprises an I/O network interface for forwarding data between the modules and the network devices via a network. Each of the I/O channels connecting a respective field device is communicatively connected to at least one of the network devices via the network. The I/O station further comprises a non-volatile storage storing configuration data for the I/O station.

According to another aspect of the present invention, there is provided an automation system comprising a plurality of network devices, a plurality of the I/O station of the present disclosure, and the network via which the I/O stations are communicatively connected to the network devices.

According to another aspect of the present invention, there is provided a method of configuring an embodiment of the I/O station of the present disclosure. The method comprises obtaining the configuration data from the storage in the I/O station, and configuring the I/O station in accordance with the obtained configuration data, including re-establishing a previously lost communication connection with at least one of the network devices, e.g. at least one controller.

By the I/O station storing (all or at least some of) its own configuration data, the I/O station is enabled to configure itself, e.g. independently of the network or in cooperation with a network device but at the initiative of the I/O station. Thus, e.g. after a power outage or other loss of connection to the network or a network device, the I/O station can configure itself or at least initiate such configuration, saving time and reducing downtime, as well as reducing complexity of any controller associated with the I/O station. The topology of the I/O station (i.e. which of the I/O channels is connecting which of the field devices is the same before and after the configuring, so there is no reconfiguration in that sense but rather an improved way of getting the I/O station up and running again after a disturbance.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic block diagram of an automation system, in accordance with some embodiments of the present invention.
Fig 2 is a schematic block diagram of an I/O station, in accordance with some embodiments of the present invention.
Fig 3 is a schematic block diagram of a storage in an I/O station, in accordance with some embodiments of the present invention.
Fig 4 is a schematic block diagram of an engineering tool, in accordance with some embodiments of the present invention.
Fig 5 is a schematic flow chart of some embodiments of the method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description. That two devices are said to be "communicatively connected" herein imply that they are connected such that they are able to communicate with each other, e.g. wirelessly or non-wirelessly.

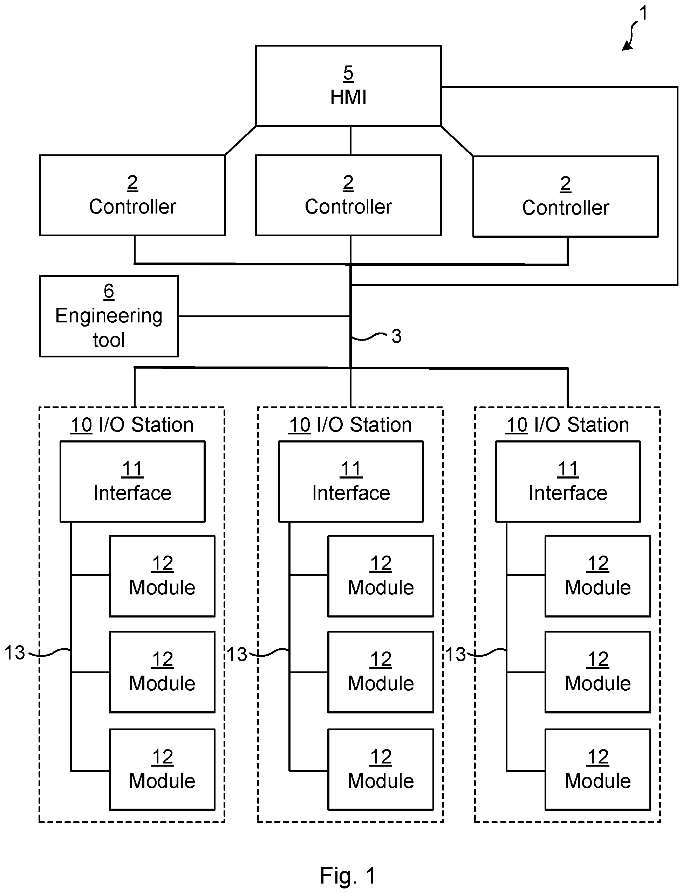

Figure 1 illustrates an automation system 1 comprising a plurality of I/O stations 10. An I/O station may be embedded hardware and software that, for inputs converts the physical signal from the process running in the plant (either directly from the process or via a field device) to digital values, and for outputs converts digital values into physical signals for the process (either directly to the process or via a field device). The I/O stations 10 are connected with a plurality of network devices via a network 3. The network may comprise one or more fieldbus(es). The network 3 may be configured for communication in accordance with an OPC Unified Architecture, OPC UA, communication protocol.

The network devices may comprise any of one or more, e.g. a plurality of, controller(s) 2, one or more, e.g. only one, Human-Machine Interface(s) (HMI) 5 and/or one or more, e.g. only one, engineering tool(s) 6. A controller 2 may be embedded hardware and software that executes a real-time plant process specific application that e.g. reads signals from the I/O stations 10, writes signals to the I/O stations 10 and/or receives commands from an HMI 5. An HMI 5 may convene to an operator the status of the process based on reading data from the controller(s) 2 and/or the I/O stations 10. The HMI 5 may additionally command a controller 2 to start an action. An engineering tool 6 may configure the binding and conversion of I/O channels of an I/O station 10 and/or the application in a controller 2. The engineering tool 6 may execute on a PC where activities are not time critical.

In the example of figure 1, there are three I/O stations 10 and three controllers 2. However, there need not be a one-to-one relationship between the number of I/O stations and the number of controllers and any one of the controllers may connect with any of the I/O channels in any of the I/O stations. In some embodiments, at least one of the network devices 2, 5 and/or 6, e.g. at least one controller 2, may be communicatively connected (i.e. connected such that it is able to communicate, e.g. wirelessly or non-wirelessly) with I/O channels of at least two of the I/O stations 10.

In the example of figure 1, the controllers 2 are connected between the I/O stations 10 and the HMI 5. For example, the HMI 5 may be connected directly to the stations 10, without being connected via a controller. However, other topologies are possible. The engineering tool 6 may be connected to any or all of the I/O stations 10, and/or to any of the controllers 2, e.g. via the network 3. Typically, the engineering tool 6 is only connected when needed, but in some embodiments it may be permanently connected.

Each of the I/O stations 10 comprises a plurality of I/O modules 12 which are interfaced with the network 3 via an I/O network interface 11. The modules 12 may be connected to the network interface 11 via one or more I/O bus(es) 13 within the station 10, and/or there may be point-to-point connections between the modules 12 and network interface 11.

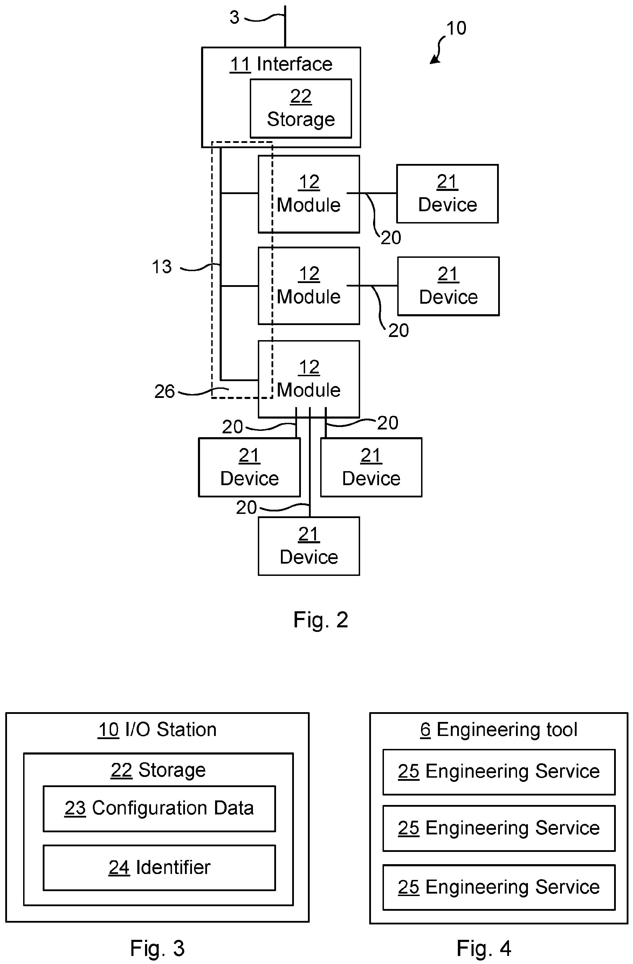

Figure 2 illustrates an I/O station 10, e.g. one of the stations 10 in figure 1, connecting a plurality of field devices 21. Each module 12 provides one or more I/O channel(s) 20, where each channel 20 can connect a respective field device 21 (i.e. one device per channel and one channel per device). In an example, one of the modules 12 provides only one channel 20 and may thus be able to connect only one field device 21. In another example, one of the modules 12 provides 16 channels 20, enabling the module to connect up to 16 field devices 21. There may be unused channels 20 (i.e. channels to which no field device is connected), but each of the channels 20 which connects a field device 21 is communicatively connected to at least one of the network devices, e.g. one or more controllers 2, via the network interface 11 and the network 3.

The modules 12 and/or the network interface 11 may be mechanically connected to one or more baseplate(s) 26 within the station 10. In some embodiment a single baseplate 26 provides slots for mechanically connecting the modules 12 and the network interface 11. In other embodiments that functionality is provided by a plurality of modular baseplates 26, one of which providing a slot for mechanically connecting the network interface 11.

The station 10 comprises a non-volatile data storage 22 storing configuration data for configuring the station. In some embodiments, the storage 22 is comprised in the network interface 11. In some embodiments, the storage is comprised in the baseplate 26, e.g. in a baseplate mechanically connecting the network interface 11.

Figure 3 illustrates a non-volatile data storage 22 arranged in the station 10. Configuration data 23 for configuring the station 10 is stored in the storage 22. The stored configuration data 23 enables the station 10 to configure itself when needed, or at least to initiate such configuration. In some embodiments, the stored configuration data 23 comprises or consists of all the configuration data needed for configuring the station 10, in which case there is no need for the station 10 to cooperate with any network device, e.g. a controller 2 or engineering tool 6 for configuring the station. In some other embodiments, the stored configuration data 23 may enable the station 10 to initiate its own configuration, e.g. including enabling the station to obtain further configuration data from a network device, e.g. a controller 2 or engineering tool 6 for completing the configuring of the station.

Since the topology of the station 10 is static, i.e. the same before and after the configuring of the station by using the stored configuration data 23, implying that the same field devices 21 are connected to the same channels 20, the stored configuration data 23 is typically specific for the station 10 as it is when connected to the same field devices 21 by the same channels 20. In some embodiments, the stored configuration data 23 may be regarded as comprising a set of configuration data, where only one set is needed for configuring the station 10 since the topology is static. There is no switching between different configurations of the station 10 when the station is configured using the stored configuration data 23. If it is determined that the topology of the station has changed before the configuring, e.g. during a power outage or other connection loss, the I/O station may not be configured by means of the stored configuration data, or at least not only the stored configuration data. Instead, configuration data for the configuring may in that case be obtained from a network device e.g. an engineering tool.

In some embodiments, the storage 22 also stores an identifier 24 of the station 10, typically a unique identifier 24. The identifier 24 may be used in communication with any of the network devices for identifying the station 10 with the network device. For example, the station 10 may send the stored identifier 24 to the engineering tool 6 in a request for configuration data from the engineering tool. By the identifier 24, identifying the station 10 to the engineering tool 6, the engineering tool 6 may then determine what configuration data to send to the station 10. The engineering tool 6 may e.g. determine from which engineering service 25 (see figure 4) to send the requested configuration data. In some embodiments, the configuring of the station 10 using the stored configuration data 23 may comprise requesting supplemental configuration data from the engineering tool by means of the stored identifier 24, whereby also the supplemental configuration data received from the engineering tool 6 may be used when configuring the station 10. Additionally or alternatively, before or after the configuring of the station 10, the station may request updated configuration data from the engineering tool 6 by means of the stored identifier 24, whereby the stored configuration data 23 may be updated (e.g. replaced with) the updated configuration data received from the engineering tool 6. Thus, the stored configuration data 23 may be kept up to date. Similarly, further configuration data, such as supplemental and/or updated configuration data as discussed herein, may be requested from any other network device (other than an engineering tool 6), e.g. from a controller 2 or from an HMI 5.

Figure 4 illustrates an engineering tool 6 which comprises a plurality of engineering services 25. Each service 25 may be dedicated to e.g. a respective station 10 or controller 2.

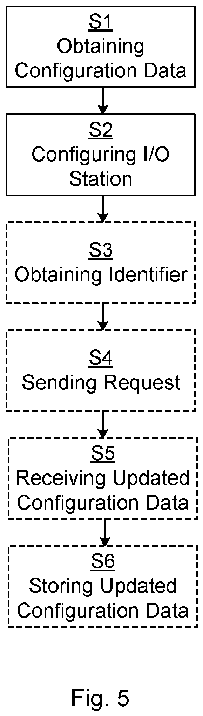

Figure 5 illustrates some embodiments of the method performed in the station 10 for configuring the I/O station 10 of the present disclosure. The configuration data 23 is obtained S1 from the storage 22 in the I/O station 10. Then, the station 10 is configured S2 in accordance with the obtained S1 configuration data 23, including re-establishing a previously lost communication connection with at least one of the network devices 2, 5 and/or 6, e.g. at least one controller 2.

In some embodiments of the present invention, the configuring S2 of the I/O station 10 further comprises obtaining an identifier 24 of the I/O station from the storage 22 in the I/O station 10, and sending a request for supplemental configuration data to an engineering tool 6 connected to the network 3, the request comprising the obtained identifier 24. In response to the sent request, supplemental configuration data is then received from the engineering tool 6. The station 10 may then be configured S2 in accordance with both the obtained S1 stored configuration data and the supplemental configuration data received from the engineering tool 6. In this case, not all configuration data needed for configuring the station 10 need to be stored in the storage 22, but the station can request the rest from the engineering tool.

Additionally or alternatively, before or after the configuring S2 of the station 10, the station may in some embodiments of the present invention request and store updated configuration data from the engineering tool 6. Thus, the method may comprise obtaining S3 an identifier 24 of the I/O station from the storage 22 in the I/O station 10, and sending S4 an update request to an engineering tool 6 connected to the network 3, the update request comprising the obtained S3 identifier 24. In response to the sent S4 update request, the station 10 then receives S5 updated configuration data from the engineering tool 6, and stores S6 the updated configuration data 23 in the storage 22.

In some embodiments of the present invention, the configuring S2 is in response to a loss of connection between the I/O station 10 and the at least one of the network devices 2, 5 and/or 6, e.g. due to a power outage affecting the I/O station.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. An input-output, I/O, station (10), connected with a plurality of network devices (2, 5, 6) in an automation system (1), the I/O station comprising:
a plurality of I/O modules (12), each I/O module providing one or more I/O channels (20) connecting respective one or more field device(s) (21); and
an I/O network interface (11) for forwarding data between the modules (12) and the network devices via a network (3);
wherein each of the I/O channels (20) connecting a respective field device (21) is communicatively connected to at least one of the network devices via the network (3); and
wherein the I/O station (10) further comprises a non-volatile storage (22) storing configuration data (23) for the I/O station.

2. The I/O station of claim 1, wherein the non-volatile storage (22) is comprised in the I/O network interface (11) and/or in a baseplate (26) providing a slot to which the I/O network interface is mechanically connected in the I/O station.

3. The I/O station of any preceding claim, wherein the configuration data (23) stored in the non-volatile storage (22) comprises or consists of all the configuration data needed for configuring the I/O station (10).

4. The I/O station of any preceding claim, wherein the network devices include any of: one or more controller(s) (2), one or more human-machine interface(s) (5) and one or more engineering tool(s) (6).

5. The I/O station of any preceding claim, wherein the non-volatile storage (22) also stores a unique identifier of the I/O station.

6. The I/O station of any preceding claim, wherein the I/O network interface (11) is configured to forward the data via the network (3) in accordance with an OPC Unified Architecture, OPC UA, communication protocol.

7. The I/O station of any preceding claim, wherein the stored configuration data (23) is specific for the I/O station as connected to the field devices (21).

8. The I/O station of any preceding claim, wherein the stored configuration data (23) is one, and only one, set of configuration data, e.g. which set is specific for the I/O station as connected to the field devices (21).

9. An automation system (1) comprising:
a plurality of network devices (2, 5, 6);
a plurality of the I/O station (10) of any preceding claim; and
the network (3) via which the I/O stations (10) are communicatively connected to the network devices.

10. The automation system of claim 9, wherein at least one of the network devices (2, 5, 6), e.g. at least one controller (2), is communicatively connected with I/O channels (20) of at least two of the I/O stations (10).

11. A method of configuring the I/O station (10) of any claim 1-8, the method comprising:
obtaining (S1) the configuration data (23) from the storage (22) in the I/O station (10); and
configuring (S2) the I/O station (10) in accordance with the obtained (S1) configuration data (23), including re-establishing a previously lost communication connection with at least one of the network devices (2, 5, 6), e.g. at least one controller (2).

12. The method of claim 11, wherein the configuring (S2) of the I/O station (10) further comprises:
obtaining an identifier (24) of the I/O station from the storage (22) in the I/O station (10);
sending a request for supplemental configuration data to an engineering tool (6) connected to the network (3), the request comprising the obtained identifier (24); and
in response to the sent request, receiving supplemental configuration data from the engineering tool (6);
wherein the I/O station is configured (S2) also in accordance with the received supplemental configuration data.

13. The method of claim 11 or 12, further comprising:
obtaining (S3) an identifier (24) of the I/O station from the storage (22) in the I/O station (10);
sending (S4) an update request to an engineering tool (6) connected to the network (3), the update request comprising the obtained (S3) identifier (24);
in response to the sent (S4) update request, receiving (S5) updated configuration data from the engineering tool (6); and
storing (S6) the updated configuration data (23) in the storage (22).

14. The method of any claim 11-13, wherein the configuring (S2) is in response to a loss of connection between the I/O station (10) and the at least one of the network devices (2, 5, 6), e.g. due to a power outage affecting the I/O station.
